Europäisches Patentamt

European Patent Office

Office européen des brevets

(11) Publication number: **0 412 767 A2**

# EUROPEAN PATENT APPLICATION

(21) Application number: 90308664.3

(51) Int. Cl.5: **F16H 1/32**

(22) Date of filing: 07.08.90

(30) Priority: 08.08.89 US 390739

(43) Date of publication of application:
13.02.91 Bulletin 91/07

(84) Designated Contracting States:
AT BE CH DE DK ES FR GB GR IT LI LU NL SE

(71) Applicant: Yang, Tai-Her
PO Box 84-85
Taipei(TW)

(72) Inventor: Yang, Tai-Her
PO Box 84-85
Taipei(TW)

(74) Representative: Arthur, Bryan Edward et al
Withers & Rogers 4 Dyer's Buildings Holborn
London EC1N 2JT(GB)

(54) A rigid harmonic speed reduction or angle cutting driving method and structure.

(57) This invention relates to a speed reduction and angular driving mechanism comprising an input shaft, (102) an output shaft, (107) and an intermediate drive transmission unit (U) for transmitting drive between the input and output shaft, the intermediate drive transmission unit (U) including a shaft member (103) connectable with the input shaft (102) and having its axis of rotation inclined to that of the input shaft, a gear ring (101) having at least one ring of gear teeth rotatably mounted on the shaft member (103), a driving connection between the drive transmission unit (U) and the output shaft (107) and a further gear ring (104) mounted on an abutment for driving cooperation with the ring gear (101), the further ring gear (104) being concentric with the output shaft (107) and having a different number of teeth or circular pitch compared with the ring gear (101) to produce a differential rotary reduction.

# A RIGID HARMONIC SPEED REDUCTION OR ANGLE CUTTING DRIVING METHOD AND STRUCTURE.

## SUMMARY OF THE INVENTION

The present invention relates to a rigid harmonic speed reduction or angle cutting driving method and structure, which has a special bending input shaft for driving and casing a swing end face gear on such bending shaft, as input shaft is engaged in rotary driving, it can drive end face gear to push and press swinging as well as differential gear fitting with another concentric reference gear locating on machine frame with drive shaft (reference gear having different number of tooth or circular pitch with swinging end face gear) and further allows both to produce differential rotary reduction motion or angle cutting, that is the special design according to present invention.

The above-said speed reduction mechanism allows to have a fixed reference gear and the external ring of swing end face gear which is able to ouput by means of friction or tooth fitting or the other way of drive, or driving output shaft by means of a swing coupling structure (including swing tooth-shaped clutch or arc shaped connector), and another way of output is that, swing end face gear is used for original-position swinging and reference gear is engaged in rotary output.

The above-said design can further operate and control the relationship between reference gear and swing end face gear becoming separated or fitted by means of manual or mechanic force in order to allow drive body on output side to form free rotation by way of separation and provided for position choice or adjusting phase relationship between driven body and input shaft.

## BRIEF DESCRIPTION OF THE DRAWINGS

Fig. 1 is solid sectional view of an embodiment of the present invention.

Fig. 2 is a sectional view of an embodiment of the present invention.

Fig. 3 is a diagramatic view of embodiments showing swing end face gear having different circular pitch with fixed end face gear to fit each other and produce differential motion according to present invention.

Fig. 4 is a solid segregational view of an embodiment having rolling column tooth-point structure according to present invention.

Fig. 5 is a digramatic view of motion in the embodiment shown in Fig. 4.

Fig. 6 is a solid diagramatic view of an embodiment showing output shaft is connected between swing end face gear and output shaft by means of arc convex sliding joint shaft structure according to present invention.

Fig. 7 is a combinational sectional view of a structure in the embodiment shown in Fig. 6.

Fig. 8 is a solid diagramatic view of an embodiment showing output structure is made by means of swing end face gear circular arc gear according to present invention.

Fig. 9 is a combinational sectional view of the structure in the embodiment shown in Fig. 8.

Fig. 10 is a solid diagramatic view of an embodiment showing output wheel is made by means of reference gear according to present invention.

Fig. 11 is a combinational sectional view of the structure in the embodiment shown in Fig. 11.

## DETAILED DESCRIPTION OF THE INVENTION

The present invention relates to provide a simple structure which can achieve the effect of speed reduction and angle cutting simultaneously; most speed reduction unit for general mechanical structure is formed by means of gear having different diameter or number of tooth or by means of worm rod, wheel, and therefore its structure is very complex and its cost is high, with a huge dimensions, while flexible speed reduction mechanism, due to restriction of materials, its flexible media has limited mechanical bearing force and easily to suffer flexible fatigue; rigid harmonic speed reduction driving method and mechanism of present invention relates to having special bending input shaft by means of coaxial center rotational shafts having different rotational speed to do relative pressing/pushing and swinging between end face gear on media push/press shaft to fit in one set of reference gear having different circular pitch, with different number of tooth or different circular pitch between both, which can produce specific differential speed reduction.

The present invention discloses a rigid harmonic speed reduction or angle cutting driving method and structure and its major features lie in:

A rotary input shaft, by means of shaft specific bend angle between it and coupling driving swing end face gear which allows input shaft to be able to force swing end face gear by means of radial forcing to swing synchronously once with each rotation of input shaft;

A reference gear, which has different number of tooth and circular pitch with swing end face gear, and both appear a specific oblique fitting, and its feature lies in that, at least one tooth is separated from each other in order to produce differential angle displacement between both during swing end face gear is swinging, and one is fixed and the other serves as output, i.e., reference gear is fixed and swing end face gear is engaged in differential position rotary output or limit swing end face gear to swinging function not for rotary displacement but let reference gear to do differential position rotary output;

Output ways include swing link shafts transmission by means of an output shaft and swing end face gear, its link shaft structure can be ball shape bending link shaft unit or tooth bending link shaft unit or bending split link shaft or universal link shaft unit; or external circumference can be made into an arc shape with high middle part and low two sides in order to coupling the other gears for output; or output by means of reference gear driving the output shaft.

The relevant embodiments will be illustrated in details accompanying by the attached drawings, in which:

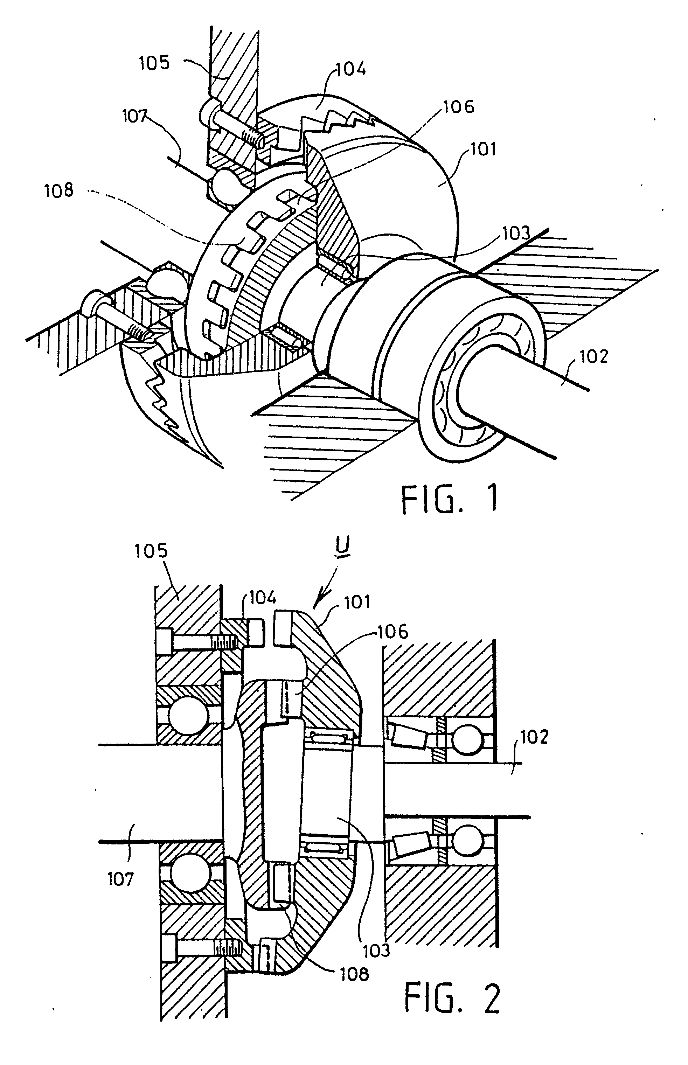

As shown in Fig. 1, it is a solid sectional view of an embodiment of present invention, in which, its major sturcture comprises :

One swing end face gear 101 which is coupling to an input shaft 102, rotational shaft section 103 coupling with such swing end face gear appears a specific bending angle (or by means of casing into an oblique hole plug) between with input shaft 102; as input shaft rotates once, swing end face gear 101 produces one cycle of pressing/pushing swing; perimeter of end face gear facing the output side has tooth strcuture providing for coupling/fixed to reference gear 104 of machine body, both appear a specific oblique coupling, and at least one section with two gears entirely separated; internal perimeter of swing end face gear 101 facing the output side has ring shaped lined tooth points 106 for coupling ring shaped lined tooth points 108 on relatively output shaft 107, both are fitting each other and impossible separated during the change cycle of swing working angle of swing end face gear 101 in order to maintain synchronous output;

The above-said reference gear 104 is fixed at machine body 105 and its gear having different number of tooth and circular pitch with swing end face gear in order to allow both to produce differential angle displacement during relatively swinging;

The above-said input shaft is provided for rotary input by means of manpower or mechanic force in order to do one cycle pressing/pushing swing for link motion swing end face gear during each rotary motion;

The above-said output shaft 107 is engaged in a synchronous joint by means of tooth link shaft structure 108 and ring shaped tooth points 106 of internal perimeter of swing end face gear in order to transmit differential angle displacement output produced due to having different number of tooth and circular pitch;

Machine cabinet unit, which is provided for locating the above-said reference gear and bearings of input shaft and output shaft as well as connect essential structures of the other machine bodies.

If the above-said structure is multi-sectional series, it can obtain multiplied reduction ratio like any traditional reduction device.

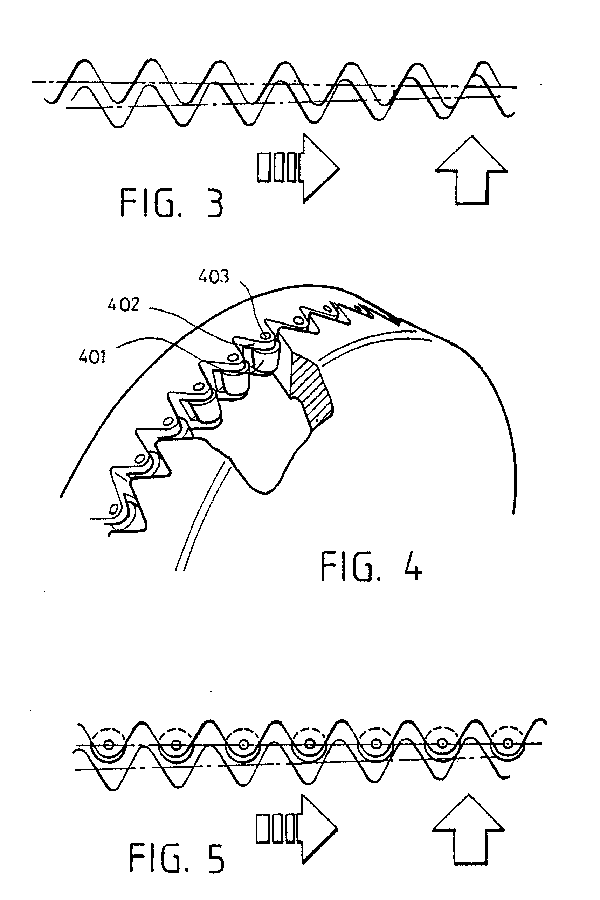

As shown in Fig. 3, it is a diagramatic view of present invention showing the motion between swing end face gear having different circular pitch and reference gear, in which, we can find a necessity of differential displacement produced by mutual forcing closely and further to locate roll wheel on each tooth tip of one gear in order to improve the above-said abrasive sliding into rolling to advance efficiency. This is particularly advantageous to the utility with large power. As shown in Fig. 4, it is a solid view of an embodiment showing it has oblique conical rolling column tooth tip structure. As shown in Fig. 5, it is a diagramatic view of its motion.

As shown in Fig. 4, each middle tooth section appears stair inclination being provided for locating media roller 401 and both sides of each tooth 402 has through hole being provided for locating roller shaft 403, roll balls (or roll column) or roller shaft being located between roller shaft 403 and roller, and bearing is located between both sides of each tooth to minimize friction loss.

For practical utility, the output way between swing end face gear and output shaft may have the following selections subject to load requirement and cost request:

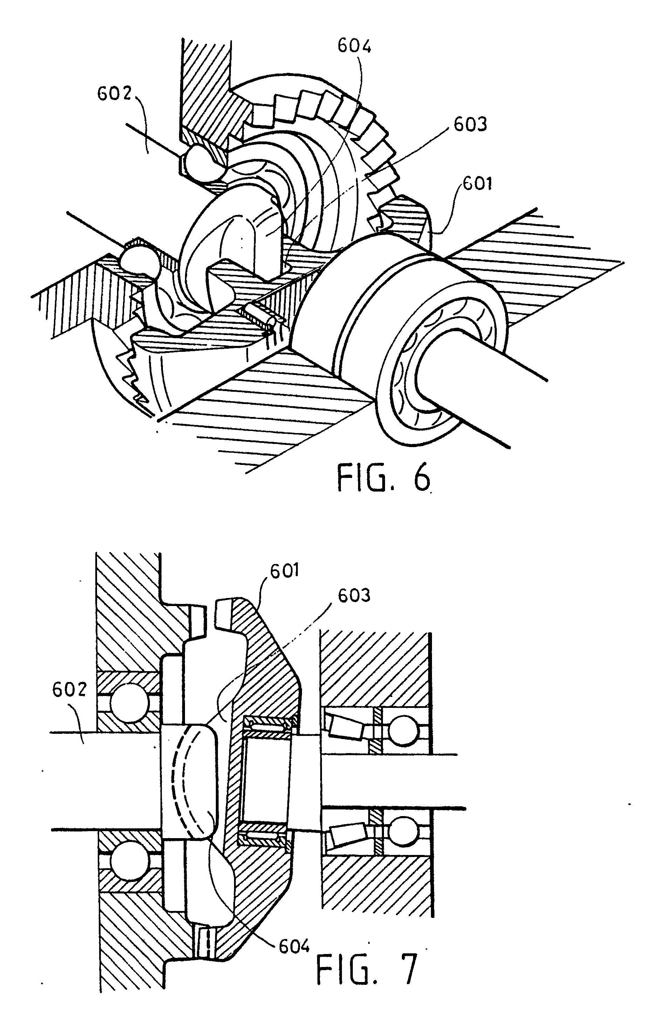

As shown in Fig. 6, it is a solid diagramatic view of an embodiment showing output shaft is connected to swing end face gear by means of arc convex slide link shaft structure according to present invention. In which, main features lie in: there has mutually fitted convex 603 and concave 604 being located between the center of swing end face gear 601 and output shaft 602, which can offer power transmission during folded angle change at moment of rotating and swinging, its convex 604 and concave 603 structure allow to be random located at any side of above-said swing end face gear facing output shaft surface or output shaft, and its chute and convex mortise joint can be one set or more.

As shown in Fig. 7, it is a sectional view of Fig. 6 to show the feature of such strcuture, in which, 603 is a chute and 604 is a convex mortise joint coupling it each other.

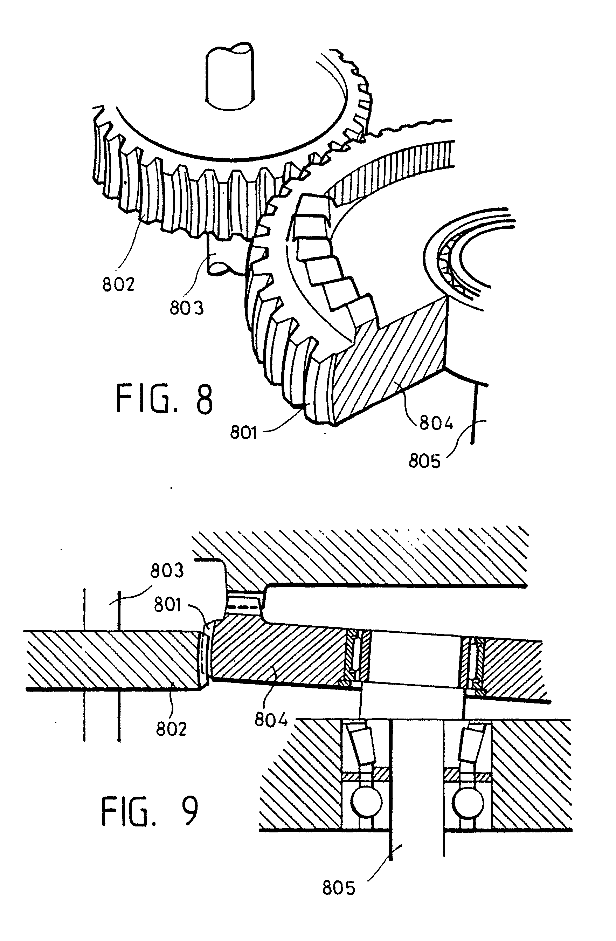

Besides, swing end face gear also allows to output by means of arc tooth beside swing gear, its structure as shown in Fig. 8, its main features lie in that, the lateral face of swing end face gear 804 has arc lateral arc tooth 801, and coupling another relatively concave arc output gear 802 for driving output shaft 803 being parallel or not parallel to input shaft 805. The width of the above-said lateral arc tooth could be coupling output gear during swing end face gear pushing/pressing output, while arc shape of arc lateral gear of swing end face gear allows to smoothly swing for rotary output subject to the angle between swing end face gear and output shaft.

Fig. 9 is a sectional view of Fig. 8, to show the feature of such structure.

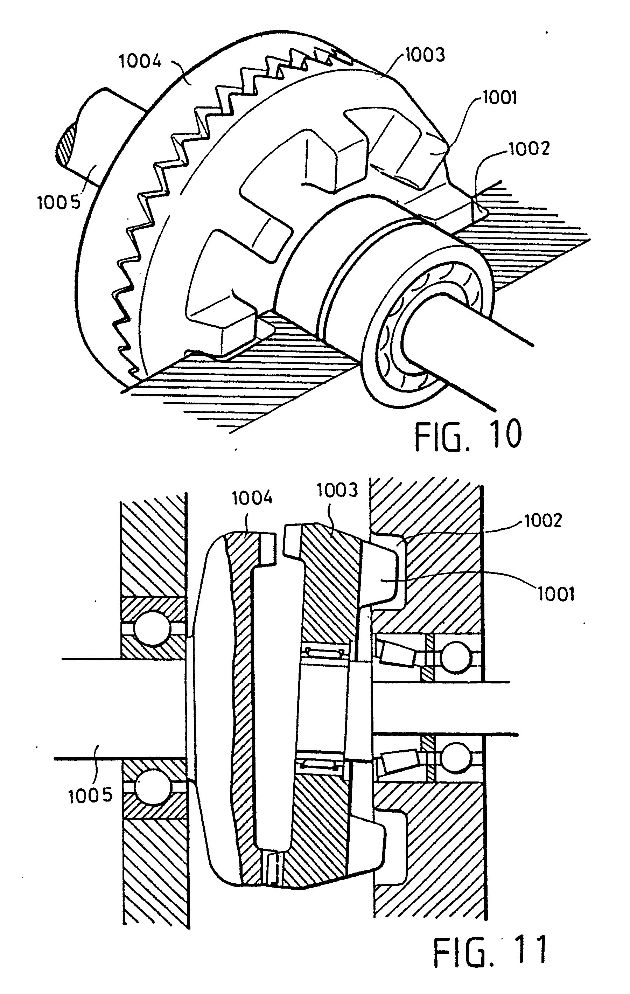

Another, for utility, it can preserve swing function of swing end face gear 1003 by means of its back or external side being made into concave-convex structure 1001 coupling another fixed mutual-complement structure 1002 as shown in Fig. 10 in order to limit it not producing rotary angle displacement but not interfere its swing function, and reference gear 1004 is joined output shaft 1005 in order to produce differential angle displacement through reference gear for transfer it to output shaft for output during swinging cycle of swing end face gear owing to different number of tooth or different number of circular pitch and tooth.

Fig. 11 is a sectional view of Fig. 10, to show the feature of such structure. If lateral face of reference gear is made into gear or belt wheel, it may allow to output from lateral side.

With the above-said methods and structures, we can achieve reduction ratio or angle cutting for output shaft (and its driven mechanism), if larger reduction ratio is required, multi-sectional series can further be made and use output shaft as a secondary input shaft in order to obtain multiplied reduction or angle cutting ratio. Owing to such structure not for reversed drive, henceforth, we can further fabricate the structure into manpower or mechanical control type for separating or fitting reference gear and swing end face gear in order to allow driven body of output side to rotate freely by means of separation being provided for position selection or adjusting phase relationship between driven body and input shaft.

To conclude what mentioned above, the present invention relates to provide a simple structure which can obtain the effect of reduction or angle cutting simultaneously; reduction device in common mechanical structure mostly comprises gear having different diameter or different number of tooth or worm rod and worm wheel, its structure is complicated and cost high expense and its dimensions is very big too, while due to limit of materials, flexible reduction mechanism of which flexible media has limited capability for bearing mechanical force and flexible fatigue occurs very easily; a rigid harmonic reduction driving method and mechanism according to present invention relates to have a specific bending input shaft as a media pressing/pushing shaft by means of rotational shafts having different rotational speed on the same shaft center, and accompany-motion end face gear is pushing, pressing swing relatively to output shaft, and its frontal face fitting one reference gear having different circular pitch, which thus produces specific differential reduction by means of both having different number of tooth or different circular pitch and different number of tooth.

**Claims**

1. A rigid harmonic reduction or angle cutting driving method and structure, which has a specific bending input shaft for driving/casing one swing end face gear on such bending angle shaft, when input shaft is engaged in rotary driving, to allow said end face gear to push, press and swing and is engaged in differential fitting together with another gear being located on the machine frame and reference gear on the same center as driving shaft (both having different number of tooth or circular pitch and tooth number) and further to enable both to produce differential rotary reduction motion or angle cutting drive which are the special designs; The above-said speed reduction mechanism allows to have a fixed reference gear and the external ring of swing end face gear which is able to ouput by means of friction or tooth fitting or the other way of drive, or driving output shaft by means of a swing coupling structure (including swing tooth-shaped clutch or arc shaped connector), and another way of output is that, swing end face gear is used for original-position swinging and reference gear is engaged in rotary output. A rotary input shaft, by means of shaft specific bend angle between it and coupling driving swing end face gear which allows input shaft to be able to force swing end face gear by means of radial forcing to swing synchronously once with each rotation of input shaft; A reference gear, which has different number of tooth and circular pitch with swing end face gear, and both appear a specific oblique fitting, and its feature lies in that, at least one tooth is separated from each other in order to produce differential angle displacement between both during swing end face gear is swinging, and one is fixed and the other serves as output, i.e., reference gear is fixed and swing end face gear is engaged in differential position rotary output or limit swing end face gear to swinging function not for rotary displacement but let reference gear to do differential position rotary output;

Output ways include swing link shafts transmission by means of an output shaft and swing end face gear, its link shaft structure can be ball shape bending link shaft unit or tooth bending link shaft unit or bending split link shaft or universal link shaft unit; or external circumference can be made into an arc shape with high middle part and low two sides in order to coupling the other gears for output; or output by means of reference gear driving the output shaft.

2. A rigid harmonic reduction or angle cutting driving method and structure, which comprises:

One swing end face gear which is coupling to an input shaft, rotational shaft section coupling with such swing end face gear appears a specific bending angle (or by means of casing into an oblique hole plug) between with input shaft; as input shaft rotates once, swing end face gear produces one cycle of pressing/pushing swing; perimeter of end face gear facing the output side has tooth strcuture providing for coupling/fixed to reference gear of machine body, both appear a specific oblique coupling, and at least one section with two gears entirely separated; internal perimeter of swing end face gear facing the output side has ring shaped lined tooth points for coupling ring shaped lined tooth points on relatively output shaft, both are fitting each other and impossible separated during the change cycle of swing working angle of swing end face gear 101 in order to maintain synchronous output;

The above-said reference gear is fixed at machine body and its gear having different number of tooth and circular pitch with swing face gear in order to allow both to produce differential angle displacement during relatively swinging;

The above-said input shaft is provided for rotary input by means of manpower or mechanic force in order to do one cycle pressing/pushing swing for link motion swing end face gear during each rotary motion;

The above-said input shaft is synchronously joined by means of tooth link shaft structure and ring shaped tooth tips of internal perimeter of swing end face gear in order to transmit differential angle displacement output produced due to having different number of tooth and circular pitch;

Machine cabinet unit, which is provided for locating the above-said reference gear and bearings of input shaft and output shaft as well as connect essential structures of the other machine bodies.

3. Swing end face gear and reference gear as set forth in above mentioned claim 1, which can be further to locate roll wheel on each tooth tip of one gear in order to improve the above-said friction sliding into rolling, the feature of its structure lies in: each middle tooth section appears stair inclined for locating media roller, both sides of each tooth have through holes for locating roller shaft, and roll balls (or roll column) or roller shaft being located between roller shaft and roller and there has bearing being located between both sides of each tooth.

4. The section between the swing end face gear as set forth in above mentioned claim 1, and output shaft can further join output shaft by means of arc convex sliding link shaft shaft structure; its main features lie in:

there has mutually fitted convex and concave being located between the center of swing end face gear and output shaft, which can offer power transmission during folded angle change at moment of rotating and swinging, its convex and concave structure allow to be random located at any side of above-said swing end face gear facing output shaft surface or output shaft, and its chute and convex mortise joint can be one set or more.

5. Swing end face gear as set forth in above mentioned claim 1, which allows to be engaged in output by means of lateral arc tooth of swing gear, the main feature of its structure lies in that, lateral part of swing end face gear has arc lateral arc tooth, and coupling another relatively concave arc output gear for driving output shaft 803 being parallel or not parallel to input shaft. The width of the above-said lateral arc tooth could be coupling output gear during swing end face gear pushing/pressing output, while arc shape of arc lateral gear of swing end face gear allows to smoothly swing for rotary output subject to the angle between swing end face gear and output shaft.

6. Swing end face gear as set forth in above mentioned claim 1, which allows to preserve the swing function of swing end face gear by means of its back or external side being made into concave-convex structure coupling another fixed mutual-complement structure in order to limit it not producing rotary angle displacement but not interfere its swing function, and reference gear is joined output shaft in order to produce differential angle displacement through reference gear for transfer it to output shaft for output during swinging cycle of swing end face gear owing to different number of tooth or different number of circular pitch and tooth. If lateral face of reference gear is made into gear or belt wheel, it may allow to output from lateral side.

7. A rigid harmonic reduction or angle cutting driving method and structure as set forth in above mentioned claim 1, which can further be engaged in multi-sectional series and use output shaft as a secondary input shaft in order to obtain multiplied reduction or angle cutting ratio.

8. A rigid harmonic reduction or angle cutting driving method and structure as set forth in above mentioned claim 1, which can further be made into manpower or mechanical controlled type to operate and control separating or fitting between reference gear and swing end face gear in order to allow driven body one output side to form free rotation by means of separating to be provided for position selection or adjusting phase relationship between driven body and input shaft.

**FIG. 1**

**FIG. 2**

FIG. 3

FIG. 4

401
402
403

FIG. 5

FIG. 6

FIG. 7

FIG. 8

FIG. 9

FIG. 10

FIG. 11